# EUROPEAN PATENT APPLICATION

(11) **EP 1 517 424 A1**
(43) Date of publication of application: **23.03.2005**
(21) Application number: 04104544.4
(22) Date of filing: 20.09.2004
(51) Int. Cl.: H02H 9/04

(54) **Surge Protection using Chassis Connection**

(30) Priority: 20.09.2003 KR 2003065411
(71) Applicant: Samsung Electronics Co., Ltd., Suwon-si, Gyeonggi-Do 442-742 (KR)
(72) Inventor: Joo, Doo-sik, Seoul, (KR)
(74) Representative: Read, Matthew Charles

(57) **Abstract**

A surge cancel apparatus. The surge cancel apparatus may include a pair of first input terminals, and various arrangements and numbers of common mode surge cancellers and normal mode surge cancellers to cancel various surges from external sources. The surge cancel apparatus can cancel external surges using a set ground (chassis) even when an earth ground does not exist. The surge cancel apparatus is applicable to a circuit such as a facsimile so that the surge cancel apparatus cancels surges inflowing to a primary side to protect a secondary side.

## Description

The present invention relates to an apparatus including common-mode surge protection means.

A conventional surge cancelling apparatus uses an earth ground in order to cancel surges inflowing from an external source.

A conventional surge cancelling apparatus includes a surge canceller, such as a gas tube, between a tip and a ring, between the tip and an earth ground, and/or between the ring and the earth ground. However, if the earth ground does not exist, since the conventional surge cancel apparatus cannot cancel external surges, the secondary side cannot be protected from the external surges. When the earth ground does not exist, , if excessive energy inflows to the primary side, energy exceeding the withstanding voltage of the primary side is transferred to the secondary side, which can destroy the secondary side.

An apparatus, according to the present invention, is characterised in that the common-mode surge protection means is connected between a power supply or signal line and chassis. The chassis may be floating with respect to an external earth or tied to an external earth.

Preferably, the common-mode surge protection means is connected between a power supply line and chassis, the power supply line is connected to a primary winding of a transformer, a rectifier, e.g. a bridge rectifier, is connected across a secondary winding of the transformer and one of the outputs of the rectifier is connected to chassis.

According to the present invention, there is also provided a mains-powered apparatus for transmitting or receiving faxes, the apparatus comprising a power supply surge protection apparatus, according to the present invention, and an apparatus, according to the present invention, connected to telephone line terminals.

Additional preferred and optional features are set forth in claims 5 to 24 appended hereto.

Embodiments of the present invention will now be described, by way of example, with reference to the accompanying drawings, in which:
Figure 1 is a block diagram of a first surge cancelling apparatus according present invention;
Figure 2 is a block diagram of a second surge cancelling apparatus according to the present invention; and
Figure 3 is a circuit diagram;
Figure 4 is a circuit diagram of a surge cancel apparatus according to the present invention.

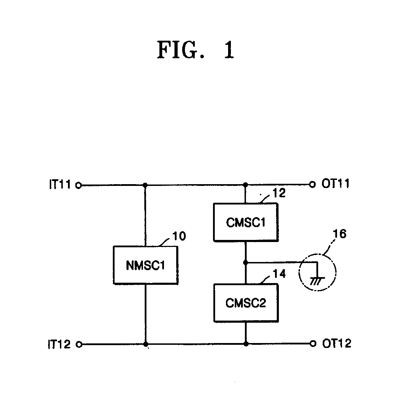

Referring to Figure 1, a surge cancelling apparatus includes a normal mode surge canceller (NMSC1) 10 and first and second common mode surge cancellers (CMSC1 and CMSC2) 12, 14.

The first common mode surge canceller (CMSC1) 12 is connected between a first input terminal IT11 and a chassis 16 and cancels surges by directing them to chassis (set ground) 16. The surges may be electrical over stress (EOS) caused by lightning, etc.

A second common mode surge canceller (CMSC2) 14, in addition to the first common mode surge canceller (CMSC2) 12, is connected between a second input terminal IT12 and chassis 16 and cancels surges by directing them to the chassis 16.

A normal mode surge canceller (NMSC1) 10 is connected between the first and second input terminals IT11, IT12 and cancels normal mode surges inflowing between the first and second input terminals IT11, IT12.

Other embodiments comprise only one of the common mode surge and cancellers described above with and without a normal mode surge canceller described above.

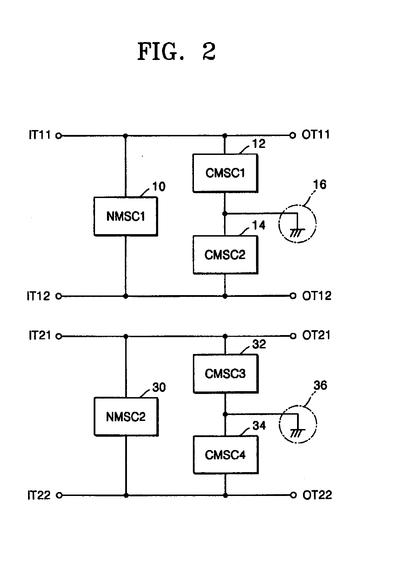

Referring to Figure 2, another surge cancelling apparatus includes first and second normal mode surge cancellers (NMSC1 and NMSC2) 10, 30, and first, second, third and fourth common mode surge cancellers (CMSC1, CMSC2, CMSC3, and CMSC4) 12, 14, 32, 34.

Thus, the embodiment of Figure 2 comprise two instances of the embodiment of Figure 1. One instance is connected to a first pair of inputs IT11, IT12 and a first pair of outputs OT11, OT12. The other instance is connected to a second pair of inputs IT21, IT22 and a second pair of outputs OT21, OT22.

The instances may be instances of any other of the 2-input/2-output embodiments described above. The instances may be of the same or different 2-input/2-output embodiments.

When employed in telephone terminal equipment, including facsimile machines, the input terminals IT11 and IT12 are tip and ring connectors respectively or *vice versa.* Alternately, the first and second input terminals IT11 and IT12 shown in Figure 1 or 2 can correspond to a ring connector and a tip connector, respectively. In this case, the first and second input terminals IT11 and IT12 shown in Figure 1 or 2 can be connected to an exchange (not shown). Accordingly, signals transmitted from the exchange can be received through the ring and the tip connectors.

When employed to protect against surges in a mains power supply, the first and second input terminals IT11 and IT12 are live and neutral terminals respectively or *vice versa.*

Any of 4-input/4-output embodiments, described with reference to Figure 2, may be employed with the first and second input terminals IT11 and IT12 being tip and ring connections, or *vice versa,* and the third and fourth input terminals IT21 and IT22 being live and neutral mains connectors, or *vice versa,* or *vice versa.*

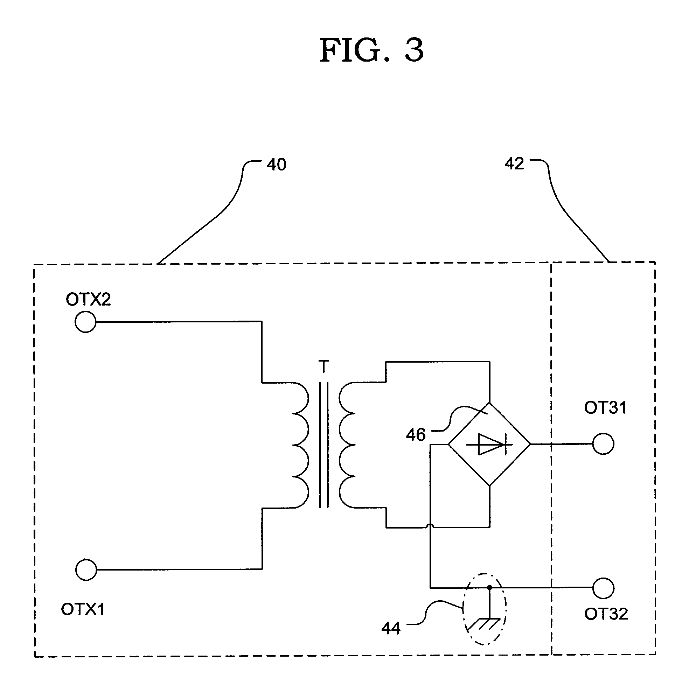

Referring to Figure 3, a circuit 40, 42 comprising a rectifier 46 and a transformer T has two inputs OTX1 and OTX2 which can be connected to any pair of output terminals, OT11 and OT 12 or OT21 and OT22, of the surge cancelling apparatus embodiments described above.

If the circuit 40, 42 is connected to a tip and ring surge cancelling apparatus, the rectifier 46 is omitted. In this case signals flowing through the tip and ring connectors, e.g. at an exchange, are passed to the outputs OTX1, OTX2 by the transformer T. On the secondary side, the incoming signal is processed, e.g. to print out a facsimile message.

If the circuit 40, 42 is connected to a mains surge cancelling apparatus, as described above, the rectifier 46 is included.

If the input terminals ITX1 and ITX2 are live and neutral terminals the rectifier 46, shown in Figure 3, is included. The input AC mains voltage is stepped down by the transformer T and rectified by the rectifier 46. The DC output of the rectifier 46 is supplied to the output terminals OTX, OTX2.

As a result, the primary side 40 acts to protect the secondary side 42 from surges. If the primary side 40 acts to receive signals instead of receiving the supply voltage, the primary side 40 also provides impedance matching between the exchange (not shown) and the secondary side 42. The chassis ground 16, 36 shown in Figures 1 and 2 is the chassis ground 44 of the DC output on the secondary side 42, shown in Figure 3.

The first, second, third and fourth common mode surge cancellers (CMSC1, CMSC2, CMSC3 and CMSC4), the first and second normal mode surge cancellers (NMSC1 and NMSC2) 12, 14, 32, 34, 10, 30, which are shown in Figure 1 or 2, may be a varistor or gas tube types.

The above-described surge cancelling apparatuses can be used in a facsimile (not shown) or a multi-function peripheral (not shown) capable of performing the operations of a facsimile machine. In this case, the first and second input terminals IT11 and IT12 correspond to ring and the tip, respectively, and the third and fourth input terminals IT21 and IT22 correspond to live and the neutral, respectively.

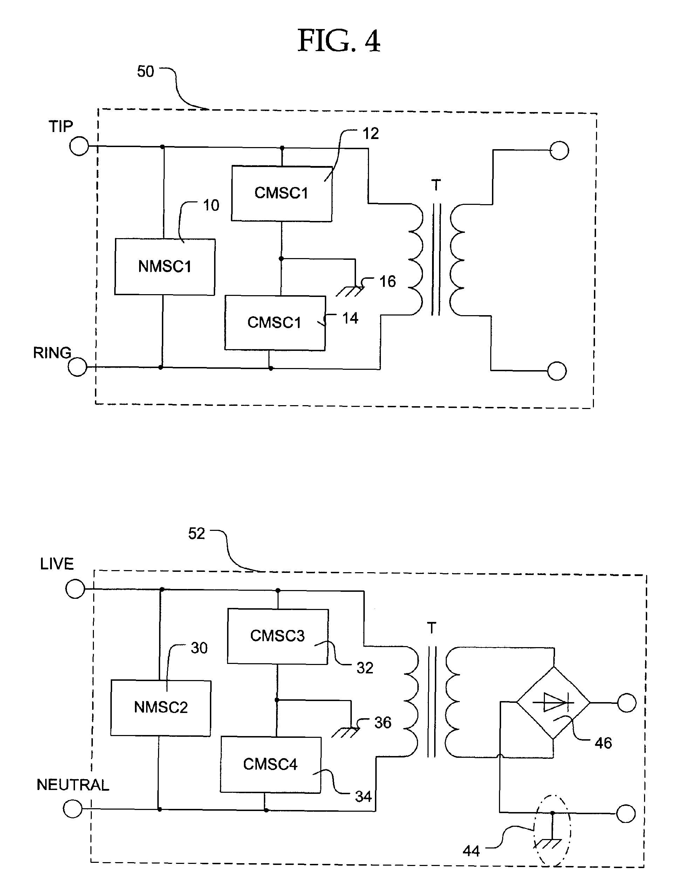

Referring to Figure 4, a surge cancel apparatus for a facsimile machine or multi-function peripheral include a signal input unit 50 and a power source unit 52.

The signal input unit 50 includes a first normal mode surge canceller (NMSC1) 10 and first and second common mode surge cancellers (CMSC1 and CMSC2) 12, 14 and a transformer T. The signal input unit 50 with this configuration allows an exchange (not shown) to communicate with facsimile machine or multi-function peripheral for facsimile transmission through the tip and the ring connectors, for example, via a Public Switched Telephone Network (PSTN). In this case, the signal input unit 50 may be a line interface unit (LIU) that is connected to the facsimile machine or multi-function peripheral through a modem (not shown).

The power source unit 52 includes a second normal mode surge canceller (NMSC2) 30 and third and fourth common mode surge cancellers (CMSC3 and CMSC4) 32, 34 and the circuit shown in Figure 3. The power source unit 52 receives, steps down and rectifies externally supplied mains power. The power source unit 52 may alternatively be a switch mode power supply (SMPS).

As described above, the surge cancel apparatuses according to the present general inventive concept can cancel external surges using a chassis even when an earth ground does not exist. The surge cancel apparatuses are applicable to a circuit such as a facsimile so that the surge cancel apparatus cancels surges inflowing to the primary side to protect the secondary side.

## Claims

1. An apparatus including common-mode surge protection means (12, 14, 32, 34), **characterised in that** the common-mode surge protection means (12, 14, 32, 34) is connected between a power supply or signal line and chassis (16, 36).

2. An apparatus according to claim 1, wherein the common-mode surge protection means (12, 14, 32, 34) is connected between a power supply line and chassis (36), the power supply line is connected to a primary winding of a transformer (T), a rectifier (46) is connected across a secondary winding of the transformer (T) and one of the outputs of the rectifier (46) is connected to chassis (44).

3. An apparatus according to claim 2, wherein the rectifier (46) is a bridge rectifier.

4. A mains-powered apparatus for transmitting or receiving faxes, the apparatus comprising an apparatus (52), according to claim 2 or 3, and an apparatus (50), according to claim 1, connected to telephone line terminals (TIP, RING).

5. A surge cancel apparatus comprising:
a first input terminal and a second input terminal; and
a first common mode surge canceller connected between the first input terminal and a set ground and cancels surges between the first input terminal and the set ground.

6. The apparatus of claim 5, further comprising a second common mode surge canceller connected between the second input terminal and the set ground to cancel surges between the second input terminal and the set ground.

7. The apparatus of claim 5, further comprising a first normal surge canceller connected between the first input terminal and the second input terminal to cancel surges between the first input terminal and the second input terminal.

8. The apparatus of claim 7, further comprising a first normal surge canceller connected between the first input terminal and the second input terminal to cancel surges between the first input terminal and the second input terminal.

9. The apparatus of claim 5, further comprising:
a third input terminal and a fourth input terminal; and
a third common mode surge canceller connected between the third input terminal and the set ground to cancel surges between the third input terminal and the set ground.

10. The apparatus of claim 9, further comprising a fourth common mode surge canceller connected between the fourth input terminal and the set ground to cancel surges between the fourth input terminal and the set ground.

11. The apparatus of claim 9, further comprising a second normal mode surge canceller connected between the third input terminal and the fourth input terminal to cancel surges between the third input terminal and the fourth input terminal.

12. The apparatus of claim 10, further comprising a second normal mode surge canceller connected between the third input terminal and the fourth input terminal to cancel surges between the third input terminal and the fourth input terminal.

13. The apparatus of claim 5, wherein the first input terminal and the second input terminal correspond to a tip connector and a ring connector, respectively.

14. The apparatus of claim 5, wherein the first input terminal and the second input terminal correspond to a hot terminal and a neutral terminal, respectively.

15. The apparatus of claim 9, wherein the first input terminal and the second input terminal correspond to a tip connector and a ring connector, respectively, and the third input terminal and the fourth input terminal correspond to a hot terminal and a neutral terminal, respectively.

16. The apparatus of claim 13, wherein the set ground is mounted on a secondary side, the secondary side receives a signal transmitted from a primary side, and the primary side transfers an external signal received through the tip connector and the ring connector to the secondary side.

17. The apparatus of claim 13, wherein the set ground is mounted on a secondary side, the secondary side receives a direct-current voltage transferred from a primary side, and the primary side converts an external alternating-current voltage received through a hot terminal and a neutral terminal to the direct-current voltage and transfers the direct-current voltage to the secondary side.

18. The apparatus of claim 7, wherein each of the first normal mode surge canceller and the first common mode surge canceller is a varistor.

19. The apparatus of claim 7, wherein each of the first normal mode surge canceller and the first common mode surge canceller is a gas tube.

20. The apparatus of claim 11, wherein each of the third common mode surge canceller and the second normal mode surge canceller is a varistor.

21. The apparatus of claim 11, wherein each of the third common mode surge canceller and the second normal mode surge canceller is a gas tube.

22. A surge cancel method, comprising:
connecting a first common mode surge canceller between a first input terminal and a set ground; and
canceling a surge between the first input terminal and the s et ground.

23. The method of claim 22, further comprising:
connecting a second common mode surge canceller between a second input terminal and the set ground; and
canceling surges between the second input terminal and the set ground.

24. The method of claim 23, further comprising:
connecting a first normal surge canceller between the first input terminal and the second input terminal; and
canceling surges between the first input terminal and the second input terminal.
